# FASCICULE DE BREVET EUROPEEN

(11) **EP 4 441 862 B1**
(45) Date de publication et mention de la délivrance du brevet: **03.09.2025**
(21) Numéro de dépôt: 22817777.0
(22) Date de dépôt: 17.11.2022
(51) Int. Cl.: H02J 7/00, B60L 53/00, H01M 10/613, H01M 10/625

(54) **PROCEDE DE REFROIDISSEMENT OPTIMISE D'UNE BATTERIE DE VEHICULE ELECTRIQUE OU HYBRIDE**
VERFAHREN ZUR OPTIMIERTEN KÜHLUNG EINER BATTERIE EINES ELEKTRO- ODER HYBRIDFAHRZEUGS
METHOD FOR OPTIMISED COOLING OF AN ELECTRIC OR HYBRID VEHICLE BATTERY

(30) Priorité: 29.11.2021 FR 2112661
(43) Date de publication de la demande: 09.10.2024
(73) Titulaire: VALEO SYSTEMES THERMIQUES, 78320 Le Mesnil Saint-Denis (FR)
(72) Inventeur: GESSIER, Bertrand, 78322 Le Mesnil-Saint-Denis Cedex (FR); COTTET, Richard, 78322 Le Mesnil-Saint-Denis Cedex (FR); CHARBONNELLE, Francois, 78322 Le Mesnil-Saint-Denis Cedex (FR)
(74) Mandataire: Valeo Powertrain Systems
(86) Numéro de dépôt international: PCT/EP2022/082314
(87) Numéro de publication internationale: WO 2023/094264

(56) Documents cités:
- DE-B3- 102019 125 396
- FR-A1- 2 983 354
- US-A1- 2013 207 464
- US-A1- 2020 412 160

## Description

L'invention concerne les véhicules automobiles électriques ou hybrides. Plus précisément, l'invention se rapporte à un procédé de refroidissement d'une batterie de véhicule électrique ou hybride.

Un véhicule automobile électrique ou hybride comporte une batterie dont l'utilisation permet de fournir de la puissance électrique au véhicule. Préalablement à cette utilisation, la batterie doit être rechargée en l'alimentant avec un courant électrique.

Afin de réduire autant que possible la durée de ce rechargement, durant laquelle le véhicule ne peut être utilisé pour rouler, on connait dans l'état de la technique des procédés dits de « fast charging », ou rechargement rapide, mettant en œuvre un courant électrique continu de fort ampérage. La puissance électrique fournie à la batterie étant une fonction croissante du courant, on comprend que l'augmentation du courant permet une augmentation de la puissance de rechargement. Cependant, la puissance thermique dissipée par la batterie, par effet Joule, est également une fonction croissante du courant, et évolue même avec le carré du courant. Cette puissance thermique dissipée par la batterie engendre une augmentation de sa température. Or une batterie présente une gamme de température dans laquelle elle présente un fonctionnement optimal, si bien qu'il est nécessaire de s'assurer que leur température reste dans ladite gamme. Sa température doit ainsi rester à tout instant supérieure à une température minimale d'utilisation optimale et rester inférieure à une température limite, ou maximale, d'utilisation optimale, ces deux valeurs de température étant prédéterminées pour une batterie donnée.

A cet égard, il est connu d'utiliser un dispositif de refroidissement du véhicule, tel qu'un système de climatisation, pour refroidir la batterie pendant le rechargement rapide. Toutefois, les besoins en refroidissement de la batterie dépendent de plusieurs paramètres, notamment l'état de charge, communément désigné par le sigle SOC pour les termes anglo-saxons « state of charge », de la batterie et de la température extérieure. Il est ainsi nécessaire d'adapter le refroidissement par le système de climatisation à chaque rechargement, voire de ralentir le rechargement si nécessaire.

Il est connu à cette fin de piloter en temps réel la recharge et le refroidissement de manière à maintenir la température de la batterie dans la gamme tout le long du rechargement. Cependant, cela peut créer une gêne chez l'utilisateur du véhicule. En effet, ce pilotage peut donner lieu à des ralentissements du rechargement et à des accélération/ralentissements du dispositif de refroidissement qui sont difficilement interprétables par l'utilisateur, d'autant que deux rechargements successifs du système de batterie ne suivront pas forcément les mêmes cycles de rechargement et de refroidissement. Un exemple est le document FR298354.

L'utilisateur du véhicule peut, erronément, interpréter cela comme un disfonctionnement du véhicule, ce qu'il est préférable d'éviter.

L'invention a notamment pour but de remédier à ces inconvénients en permettant un refroidissement le plus optimisé possible de la batterie pendant son rechargement, ce sans multiplier des phases différentes de refroidissement et de rechargement pouvant engendrer une confusion chez l'utilisateur du véhicule.

A cet effet, on prévoit selon l'invention un procédé de refroidissement d'une batterie de véhicule électrique ou hybride dans lequel :
- on détermine une courbe de puissance thermique théorique dissipée par la batterie en fonction du temps lors d'un rechargement continu de la batterie à puissance de chargement maximale et de la durée du rechargement de la batterie,
- on détermine la puissance thermique maximale dissipée par la batterie lors du rechargement,
- on détermine une puissance maximale de refroidissement d'un dispositif de refroidissement de la batterie,
- on détermine une température maximale théorique qu'atteint la batterie lors d'un rechargement à puissance de chargement maximale, en tenant compte notamment de la courbe de puissance thermique théorique dissipée par la batterie, de la température extérieure et de l'état de charge initial de la batterie,
- on compare la puissance maximale de refroidissement avec la puissance thermique maximale dissipée par la batterie, puis
- on lance le rechargement de la batterie et, en fonction de la comparaison, on impose une puissance de refroidissement au dispositif de refroidissement selon plusieurs paliers successifs décroissants dans le temps.

Ainsi, il est possible d'optimiser le rechargement et le refroidissement de la batterie grâce à la détermination et la comparaison des grandeurs listées ci-dessus. L'idée générale est de permettre un rechargement et un refroidissement les plus puissants au moins en début de recharge, et si la puissance de rechargement maximale est supérieure à la puissance de refroidissement maximale, alors on adapte ces puissances dans au moins une deuxième phase afin d'obtenir un équilibre convenable entre le rechargement et le refroidissement. On comprend alors que le temps de rechargement peut être optimisé en fonction des paramètres de la batterie, notamment son état de charge, et de paramètres extérieurs, tels que la température ambiante et la puissance maximale du dispositif de refroidissement.

En outre, grâce à la mise en œuvre de paliers successifs de rotation du compresseur du dispositif de refroidissement qui sont décroissants dans le temps, le fonctionnement parait conforme à l'intuition générale de l'utilisateur du véhicule. En effet, il sait qu'une batterie dissipe moins de chaleur au fur et à mesure qu'elle se recharge, d'où la baisse du besoin en refroidissement par le dispositif de refroidissement au fur et à mesure du rechargement de la batterie. Les paliers successifs décroissants de vitesse de rotation du compresseur ne sont donc pas une source de confusion pour l'utilisateur.

Avantageusement, si la puissance thermique maximale dissipée par la batterie est supérieure à la puissance maximale de refroidissement, on compare également la température maximale théorique de la batterie avec une température d'utilisation maximale de la batterie.

Il est ainsi aussi possible d'adapter le procédé de refroidissement de la batterie afin de faire en sorte que sa température ne dépasse par une température prédéterminée. Cela est préférable car un tel dépassement pourrait détériorer la batterie.

Selon un premier mode d'implémentation de l'invention dans lequel la température maximale théorique de la batterie est supérieure à la température d'utilisation maximale de la batterie, le procédé comprend successivement :
- une première phase de haut refroidissement, lors de laquelle la puissance de recharge est à puissance de recharge maximale et lors de laquelle on impose un premier palier à la puissance de refroidissement égal à la puissance de refroidissement maximale au dispositif de refroidissement, tout le long de la phase de haut refroidissement,
- une phase de régulation du rechargement, faisant suite à la phase de haut refroidissement, lors de laquelle on impose toujours un premier palier à la puissance de refroidissement égal à la puissance de refroidissement maximale du dispositif de refroidissement ainsi qu'une puissance de rechargement de la batterie selon une consigne inférieure à la puissance de recharge maximale de sorte que la puissance thermique dissipée par la batterie soit égale à la puissance de refroidissement maximale imposée au dispositif de refroidissement, et
- une phase de bas refroidissement, succédant la phase de régulation du rechargement, lors de laquelle la puissance de recharge est à puissance de recharge maximale et lors de laquelle on impose une puissance de refroidissement au dispositif de refroidissement au selon un ou plusieurs paliers, jusqu'à la fin du rechargement de la batterie de sorte que, lors de la phase de bas refroidissement, la puissance moyenne de refroidissement est égale à la puissance moyenne thermique dissipée par la batterie, la phase de bas refroidissement s'achevant à la fin du rechargement de la batterie.

Ce mode d'implémentation correspond au cas où le dispositif de refroidissement ne permet pas un refroidissement suffisant de la batterie pour maintenir sa température inférieure à la température d'utilisation maximale de la batterie en cas de rechargement non bridé de la batterie tout le long du rechargement. Dans ce cas-là, on bride temporairement la puissance de rechargement pour permettre au refroidissement de rattraper la puissance thermique dissipée par la batterie.

De préférence, la phase de haut refroidissement s'achève lorsque la température réelle de la batterie atteint la température d'utilisation maximale.

On maximise ainsi la période pendant laquelle la puissance de rechargement est maximale, ce qui permet de minimiser la durée du rechargement de la batterie.

De préférence, la phase de régulation du rechargement s'achève lorsque la puissance thermique réelle dissipée par la batterie rejoint la puissance thermique théorique dissipée par la batterie.

Cela permet de minimiser la durée de la phase de régulation durant laquelle on bride la puissance de rechargement et contribue ainsi à réduire la durée du rechargement de la batterie.

Selon un deuxième mode d'implémentation de l'invention dans lequel la température maximale théorique de la batterie est inférieure à la température d'utilisation maximale de la batterie, le procédé comprend successivement :
- une phase de haut refroidissement, lors de laquelle la puissance de recharge est à puissance de recharge maximale et lors de laquelle on impose une puissance de refroidissement au dispositif de refroidissement selon un palier inférieur à la puissance de refroidissement maximale du dispositif de refroidissement, tout le long de la phase de haut refroidissement,
- une phase de bas refroidissement, succédant la phase de haut refroidissement, lors de laquelle la puissance de recharge est à puissance de recharge maximale et lors de laquelle on impose une puissance de refroidissement selon un ou plusieurs paliers décroissants dans le temps et inférieurs au palier de vitesse de rotation intermédiaire de sorte que, lors de la phase de bas refroidissement, la puissance moyenne de refroidissement est égale à la puissance thermique moyenne dissipée par la batterie, la phase de bas refroidissement s'achevant à la fin du rechargement de la batterie.

Ce mode d'implémentation correspond au cas où le dispositif de refroidissement permet un refroidissement suffisant de la batterie pour maintenir sa température inférieure à la température d'utilisation maximale de la batterie en cas de rechargement non bridé de la batterie tout le long du rechargement. Dans ce cas-là, il est possible de permettre une puissance de rechargement maximal tout le long du rechargement en imposant des paliers successifs décroissants de vitesse de rotation du compresseur du dispositif de refroidissement choisis pour limiter la puissance de refroidissement. Cela permet de limiter la consommation énergétique du dispositif de refroidissement tout en maintenant la température de la batterie inférieure à sa température d'utilisation maximale.

De préférence, la phase de haut refroidissement s'achève lorsque la puissance thermique dissipée par la batterie atteint le palier de la puissance de refroidissement du dispositif de refroidissement.

On maximise ainsi la période pendant laquelle la puissance de rechargement est maximale, ce qui permet de minimiser la durée du procédé de rechargement de la batterie.

Selon un troisième mode d'implémentation de l'invention dans lequel la puissance maximale de refroidissement est supérieure à la puissance thermique maximale dissipée par la batterie lors du rechargement à puissance de recharge maximale, le procédé comprend une unique phase de haut refroidissement, s'achevant en même temps que le rechargement de la batterie, lors de laquelle la puissance de recharge est à puissance de recharge maximale et lors de laquelle on impose une puissance de refroidissement au dispositif de refroidissement selon un ou plusieurs paliers inférieurs à la puissance de refroidissement maximale du dispositif de refroidissement, tout le long de la recharge de la batterie, de sorte que la température réelle de la batterie reste comprise entre la température d'utilisation maximale de la batterie et une température seuil d'utilisation optimale de la batterie.

Ce mode d'implémentation correspond au cas où le dispositif de refroidissement permet un refroidissement suffisant pour empêcher toute élévation de température de la batterie pendant le rechargement. Dans ce cas-là, on limite tout de même la puissance de refroidissement afin de limiter la consommation énergétique du dispositif de refroidissement.

De préférence, la phase de haut refroidissement débute si la température initiale de la batterie est supérieure ou égale à la température seuil d'utilisation optimale de la batterie.

Ainsi, s'il est nécessaire de faire monter la température de la batterie afin par exemple d'en améliorer les conditions d'utilisation si elle présente initialement une température trop basse, alors on prévoit une phase de rechargement sans refroidissement de la batterie.

Avantageusement, le dispositif de refroidissement de la batterie est compris dans un dispositif de climatisation d'un habitacle de véhicule, la détermination de la puissance maximale de refroidissement du dispositif de refroidissement de la batterie correspondant à la puissance maximale de refroidissement du dispositif de climatisation retranché de la puissance de refroidissement utilisé pour le refroidissement de l'habitacle.

L'invention peut ainsi être adaptée au cas où le dispositif de refroidissement n'est pas entièrement dédié au refroidissement de la batterie, ce qui améliore la souplesse de l'invention.

### Brève description des figures

L'invention sera mieux comprise à la lecture de la description qui va suivre donnée uniquement à titre d'exemple et faite en se référant aux dessins annexés dans lesquels :

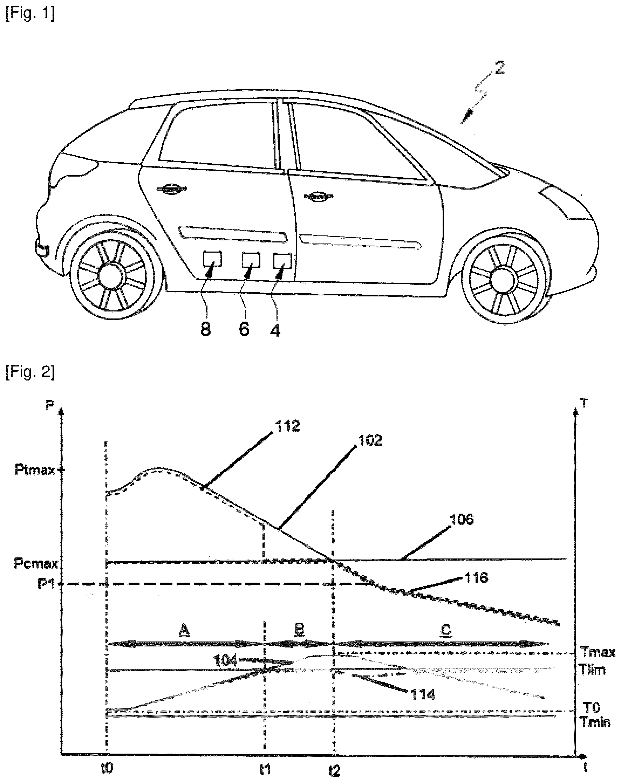

[Fig. 1] la figure 1 est une vue schématique d'un véhicule automobile comprenant une batterie et un dispositif de refroidissement,
[Fig. 2] la figure 2 est un graphique représentant l'évolution de la puissance thermique dissipée par la batterie, de la puissance de refroidissement fournie par le dispositif de refroidissement et de la température de la batterie en fonction du temps selon un premier mode d'implémentation d'un procédé de refroidissement selon l'invention,

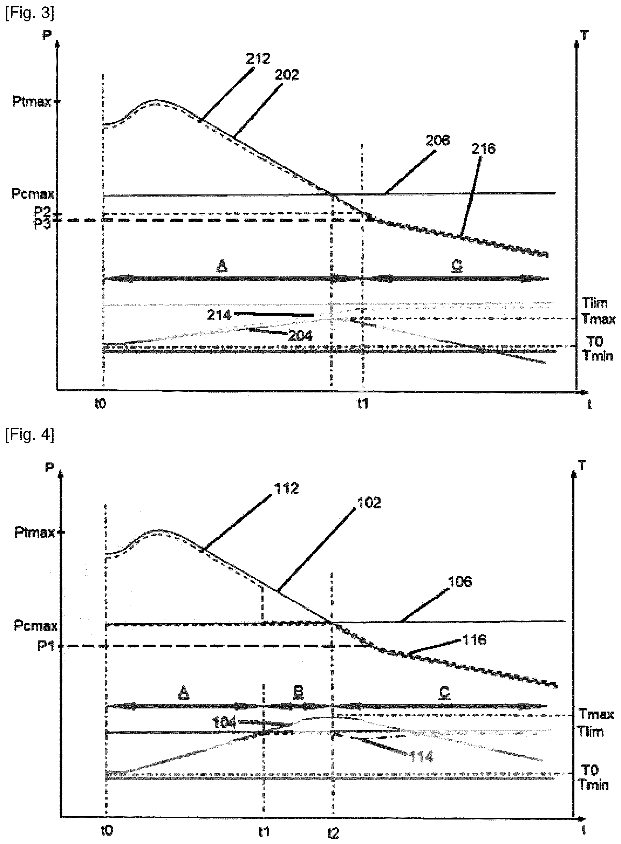

[Fig. 3] la figure 3 est un graphique représentant l'évolution de la puissance thermique dissipée par la batterie, de la puissance de refroidissement fournie par le dispositif de refroidissement et de la température de la batterie en fonction du temps selon un deuxième mode d'implémentation du procédé de refroidissement selon l'invention, et
[Fig. 4] la figure 4 est un graphique représentant l'évolution de la puissance thermique dissipée par la batterie, de la puissance de refroidissement fournie par le dispositif de refroidissement et de la température de la batterie en fonction du temps selon un troisième mode d'implémentation du procédé de refroidissement selon l'invention.

### Description détaillée

Les éléments identiques sur les figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la présente description on peut indexer certains éléments ou paramètres, comme par exemple premier élément ou deuxième élément ainsi que premier paramètre et deuxième paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tels ou tels critères.

On a représenté en figure 1 un véhicule automobile électrique ou hybride 2. Il comprend une batterie 4 configurée pour fournir de l'énergie au véhicule afin de le faire rouler, de manière connue en soi. Le véhicule 2 comprend également un dispositif de refroidissement 6 configuré pour notamment refroidir la batterie 4 pendant un rechargement de celle-ci. En effet, le rechargement de la batterie 4 se fait par le passage d'un courant à travers la batterie, ce qui génère de la chaleur par effet Joule. A cet effet, le dispositif de refroidissement 6 comprend classiquement un compresseur, un évaporateur agencé pour refroidir la batterie 4 et un condenseur agencé pour dissiper la chaleur issue de la batterie 4. Le dispositif de refroidissement 6 comporte en outre un ventilateur agencé de sorte à générer un flux d'air au travers du condenseur, la vitesse de rotation dudit ventilateur suivant les mêmes paliers que le compresseur. Une telle configuration de dispositif de refroidissement étant connue, elle ne sera pas décrite davantage dans ce qui suit.

Le véhicule 2 comprend une unité de commande électronique 8 permettant la mise en œuvre d'un procédé de refroidissement, selon l'invention, de la batterie 4 pendant un rechargement de celle-ci. On va désormais décrire un tel procédé.

On a représenté en figure 2 un graphique représentant l'évolution de la puissance thermique dissipée par la batterie 4, de la puissance P de refroidissement fournie par le dispositif de refroidissement 6 et de la température T de la batterie 4 en fonction du temps t selon un premier mode d'implémentation du procédé de refroidissement. De telles puissances sont généralement exprimées en Watt.

On commence par réaliser des mesures de certaines grandeurs théoriques qui permettent de calibrer au mieux le procédé à l'état réel de la batterie et aux conditions extérieures.

Tout d'abord, on simule un rechargement de la batterie (4) au moyen d'une station de recharge prédéterminée, par exemple une borne de recharge à laquelle le véhicule est branchée, avec une puissance de refroidissement maximal de la batterie 4 au moyen du dispositif de refroidissement 6. Cette simulation se fait à puissance de recharge maximale, c'est-à-dire sans limiter l'ampérage de la station de rechargement et pour un rechargement complet de la batterie 4. Cette simulation permet de déterminer une courbe de puissance thermique théorique 102 montrant la puissance thermique dissipée par la batterie 4 en fonction du temps durant le rechargement. Cette courbe de puissance thermique théorique 102dissipée par la batterie 4 permet ainsi de déterminer une puissance thermique maximale Ptmax dissipée par la batterie (4).

Cette simulation permet également de déterminer une courbe de l'évolution de la température théorique 104 de la batterie 4 en fonction du temps durant le rechargement. Cette courbe de température théorique 104 de la batterie 4 permet également de déterminer une température maximale Tₘₐₓ qu'atteint la batterie 4 durant le rechargement. De préférence, cette simulation prend compte la résistance interne de la batterie 4 qui peut varier notamment en fonction du vieillissement des cellules composants la batterie.

Cette simulation permet en outre de déterminer la durée minimale du rechargement. Cette simulation prend notamment en compte la température extérieure, par exemple mesurée avec un thermomètre équipant le véhicule, ainsi que l'état de charge initial de la batterie, c'est-à-dire l'état de charge de la batterie au début t₀ de la simulation.

Parallèlement, on détermine une puissance maximale de refroidissement Pcmax, symbolisée par la droite 106, du dispositif de refroidissement 6 de la batterie 4. Il s'agit d'une puissance prédéterminée qui dépend notamment du dimensionnement et de l'architecture du dispositif de refroidissement 6 ainsi que de la vitesse maximale de rotation de son compresseur. D'autres paramètres tels que la puissance thermique des échangeurs de chaleurs et la température ambiante rentrent également en compte pour la détermination de la puissance maximale de refroidissement Pcmax. C'est donc une valeur connue, par exemple fournie par le fournisseur du dispositif de refroidissement 6. La puissance de refroidissement peut être réduite à tout instant en commandant une réduction de la vitesse du compresseur et/ou de la vitesse du ventilateur générant le flux d'air traversant le condenseur, de manière à obtenir une puissance de refroidissement comprise entre 0 et la puissance maximale de refroidissement Pcmax du dispositif de refroidissement 6.

On peut prévoir que le dispositif de refroidissement de la batterie soit compris dans un dispositif de climatisation d'un habitacle de véhicule. Dans ce cas, la détermination de la puissance maximale Pcmax de refroidissement du dispositif de refroidissement 6 de la batterie 6 correspond à la puissance maximale de refroidissement du dispositif de climatisation retranché de la puissance de refroidissement utilisé pour le refroidissement de l'habitacle. Le procédé de refroidissement tel que décrit dans ce qui suit est alors mis en œuvre de façon similaire en considérant la partie de la puissance de refroidissement dédiée à la batterie 4.

Au moment de démarrer le rechargement, on compare les valeurs de la température maximale théorique Tmax de la batterie 4 et une température d'utilisation maximale Tlim de la batterie 4. Cette température d'utilisation maximale Tlim de la batterie 4 est une valeur prédéterminée qui dépend de la nature, notamment de la chimie, de la batterie 4 et est connue, par exemple fournie par le fournisseur de la batterie 4. Cette température d'utilisation maximale Tlim correspond à une température au-delà de laquelle les performances de la batterie 4 sont réduites et également au-delà de laquelle la batterie 4 peut commencer à se détériorer.

Le mode d'implémentation de la figure 2 correspond au cas où la température maximale théorique Tmax de la batterie 4 est supérieure à température d'utilisation maximale Tlim de la batterie 4. Cela signifie qu'en dépit de la puissance maximale de refroidissement Pcmax du dispositif de refroidissement 6, un rechargement non bridé va causer une élévation en température de la batterie trop importante pour reste en deçà de la température d'utilisation maximale Tlim de la batterie 4.

On a représenté sur la figure 2 une courbe de puissance thermique réelle 112 dissipée par la batterie 4, la courbe de température réelle 114 de la batterie 4 et la courbe de puissance de refroidissement 116 fournie par le dispositif de refroidissement 6 en fonction du temps durant le rechargement afin d'illustrer les effets du procédé selon l'invention.

Le procédé selon mode d'implémentation de la figure 2 comprend alors premièrement une phase A de haut refroidissement, lors de laquelle la puissance de recharge est à puissance de recharge maximale et lors de laquelle on impose une puissance de refroidissement maximale Pcmax au dispositif de refroidissement 6, par exemple selon un palier de vitesse de rotation du compresseur maximal, tout le long de la phase A de haut refroidissement. Ainsi, lors de cette phase A de haut refroidissement, la puissance de refroidissement 116 fournie par le dispositif de refroidissement 6 est maintenue à la puissance de refroidissement maximale Pcmax du dispositif de refroidissement 6. Pendant cette première phase A, la puissance thermique réelle 112 dissipée par la batterie 4 au cours du temps est égale à la puissance thermique théorique 102 dissipée par la batterie 4 au cours du temps. Cela s'explique du fait que le chargement de la batterie 4 est réalisé à sa puissance maximale. Pendant cette phase A de haut refroidissement , la puissance de refroidissement 116 du dispositif de refroidissement 6 est inférieure à la puissance thermique dissipée 112 par la batterie 4, si bien que cette dernière monte en température comme le montre l'évolution de la température réelle 114 de la batterie 4 qui est égale à l'évolution de la température théorique 104 de la batterie 4. La phase A de haut refroidissement s'achève lorsque la température réelle 114 de la batterie 4 atteint sa température d'utilisation maximale Tlim.

Préférentiellement, cette phase A de haut refroidissement débute lorsque la température réelle 114 de la batterie 4 est supérieure ou égale à une température seuil d'utilisation optimale Tmin de la batterie 4. Cette température seuil d'utilisation optimale Tmin est une température en-deçà de laquelle la batterie 4 ne peut délivrer ou recevoir une puissance électrique pour son fonctionnement normal ou pour sa recharge. Cette température seuil d'utilisation optimale Tmin est une donnée connue fournie notamment par le fournisseur de la batterie 4. En d'autres termes, on commence alors le rechargement de la batterie 4 sans la refroidir. Cela permet de profiter du rechargement afin de chauffer la batterie pour que sa température initiale T0 dépasse sa température seuil d'utilisation optimale Tmin.

Le procédé selon mode d'implémentation de la figure 2 comprend successivement à la phase A de haut refroidissement, une phase B de régulation du rechargement lors de laquelle on impose toujours une puissance de refroidissement maximal au dispositif de refroidissement 6, par exemple selon un palier de vitesse de rotation du compresseur maximal. La puissance de refroidissement 116 fournie par le dispositif de refroidissement 6 est ainsi toujours égale à la puissance de refroidissement maximale Pcmax du dispositif de refroidissement 6 durant cette phase B de régulation du rechargement. Toutefois, on impose désormais une puissance de rechargement de la batterie 4 selon une consigne inférieure à la puissance de recharge maximale de sorte que la puissance thermique réelle 112 dissipée par la batterie 4 soit égale à la puissance de refroidissement maximale Pcmax imposée au dispositif de refroidissement 6. Cette diminution de la puissance de rechargement peut notamment être réalisée par diminution de l'ampérage de recharge. La puissance thermique réelle 112 dissipée par la batterie 4 n'est alors non plus égale à la puissance thermique théorique 102 dissipée par la batterie 4 mais est égale à la puissance de refroidissement maximale Pcmax du dispositif de refroidissement 6. Cela permet de stabiliser la température réelle 114 de la batterie 44 pour empêcher qu'elle ne dépasse sa température d'utilisation maximale Tlim, ce qui arriverait si on ne bridait pas la puissance de rechargement. La température réelle 114 de la batterie 4 est alors maintenue à la température d'utilisation maximale Tlim de la batterie 4. La phase B de régulation du rechargement s'achève lorsque la puissance thermique réelle 112 dissipée par la batterie 4, donc soumise à la consigne, rejoint la puissance thermique théorique 102 dissipée par la batterie 4.

Le procédé selon mode d'implémentation de la figure 2 comprend successivement à la phase B de régulation du rechargement, une phase C de bas refroidissement lors de laquelle la puissance de recharge est à puissance de recharge maximale et lors de laquelle on impose une puissance de refroidissement 116 au dispositif de refroidissement 6 selon un ou plusieurs paliers inférieurs à la puissance maximale de refroidissement Pcmax du dispositif de refroidissement 6, jusqu'à la fin du rechargement de la batterie 4. Ces paliers sont réalisés par exemple selon différents paliers de vitesse de rotation intermédiaires du compresseur inférieurs à la vitesse de rotation maximum. Lors de la phase C de bas refroidissement, la puissance moyenne de refroidissement est ainsi égale à la puissance moyenne thermique dissipée par la batterie 4. Par puissance moyenne de refroidissement on entend ici la moyenne entre les différentes puissances de refroidissement imposées selon les différents paliers de puissance de refroidissement 116. La phase de bas refroidissement s'achève à la fin du rechargement de la batterie 4. L'exemple de la figure 2 montre la présence d'un unique palier P1 de puissance de refroidissement 116, mais il est possible d'en prévoir plusieurs. Cela se traduit par le fait que la puissance de refroidissement 116 fournie par le dispositif de refroidissement 6 forme un palier à une puissance de refroidissement P1. La phase C de bas refroidissement permet d'éviter de trop refroidir la batterie 4, ce qui constituerait une dépense énergétique inutile. La température réelle 114 de la batterie 4 est ainsi maintenue proche de sa température d'utilisation maximale Tlim. En outre, des paliers dégressifs de puissance de refroidissement 116 de par des paliers décroissants de vitesse de rotation du compresseur peuvent être perçus par l'utilisateur et permettent de lui indiquer que la recharge de la batterie 4 approche de son terme.

On a représenté en figure 3 un graphique représentant l'évolution de la puissance P thermique dissipée par la batterie, de la puissance P de refroidissement fournie par le dispositif de refroidissement et de la température T de la batterie en fonction du temps t selon un deuxième mode d'implémentation du procédé de refroidissement. Les éléments correspondant à ceux représentés dans la figure précédente présentent des références numériques augmentées de 100 par rapport à la figure 2.

Le mode d'implémentation de la figure 3 correspond au cas où la température maximale théorique Tₘₐₓ de la batterie 4 est inférieure à sa température d'utilisation maximale Tlim. Cela signifie qu'un refroidissement maximal de la batterie 4 est suffisant pour maintenir la température de la batterie 4 à une température optimale d'utilisation, même sans brider le rechargement. En d'autres termes, la puissance maximale de refroidissement Pcmax, symbolisée par la droite 206, est supérieure à la puissance thermique moyenne dissipée par la batterie 4 pendant le rechargement. On peut ainsi se passer de la deuxième phase B de régulation du rechargement décrite dans le mode d'implémentation de la figure 2. Seuls peuvent être nécessaires la phase A de haut refroidissement et la phase C de bas refroidissement.

On a représenté sur la figure 3 la courbe de puissance thermique réelle 212 dissipée par la batterie 4, la courbe de température réelle 214 de la batterie 4 et la courbe de puissance de refroidissement 216 fournie par le dispositif de refroidissement 6.

Le procédé selon mode d'implémentation de la figure 3 comprend premièrement une phase A de haut refroidissement, lors de laquelle la puissance de recharge est à puissance de recharge maximale et lors de laquelle on impose une puissance de refroidissement au dispositif de refroidissement 6 selon un palier P2 inférieure à la puissance maximale de refroidissement Pcmax tout le long de la phase A de haut refroidissement. Ce palier P2 de puissance de refroidissement 216 est par exemple obtenu selon un palier de vitesse de rotation intermédiaire du compresseur inférieur à la vitesse de rotation maximale du compresseur. Pendant cette phase A de haut refroidissement, la puissance de refroidissement 216 est inférieure à la puissance thermique réelle dissipée 212 par la batterie 4, si bien que la température réelle 214 de cette dernière augmente. La phase A de haut refroidissement s'achève notamment lorsque la puissance thermique réelle dissipée 212 par la batterie 4 atteint le palier P2 de la puissance de refroidissement 216 du dispositif de refroidissement 6.

Préférentiellement, cette phase A de haut refroidissement débute lorsque la température réelle 214 de la batterie 4 est supérieure ou égale à une température seuil d'utilisation optimale Tmin de la batterie 4. Cette température seuil d'utilisation optimale Tmin est une température en-deçà de laquelle la batterie 4 ne peut délivrer ou recevoir une puissance électrique pour son fonctionnement normal ou pour sa recharge. Cette température seuil d'utilisation optimale Tmin est une donnée connue fournie notamment par le fournisseur de la batterie 4. En d'autres termes, on commence alors le rechargement de la batterie 4 sans la refroidir. Cela permet de profiter du rechargement afin de chauffer la batterie pour que sa température initiale T0 dépasse sa température seuil d'utilisation optimale Tmin.

Le procédé selon le mode d'implémentation de la figure 3, comprend successivement à la phase A de haut refroidissement une phase C de bas refroidissement lors de laquelle la puissance de recharge est égale à la puissance de recharge maximale et lors de laquelle on impose une puissance de refroidissement 216 selon un ou plusieurs paliers P3 décroissants dans le temps et inférieurs au palier P2 de la phase de haut refroidissement A. Ces paliers P3 sont obtenus par exemple par les paliers de vitesse de rotation bas du compresseur décroissants dans le temps et inférieurs au palier de vitesse de rotation intermédiaire. Ces paliers P3 de puissance de refroidissement 216 sont réalisés de sorte que, lors de la phase de bas refroidissement, la puissance moyenne de refroidissement est égale à la puissance thermique moyenne dissipée par la batterie 4. La phase C de bas refroidissement s'achève plus particulièrement à la fin du rechargement de la batterie. La phase C de bas refroidissement permet d'éviter de trop refroidir la batterie 4, ce qui constituerait une dépense énergétique inutile, et de maintenir la température réelle 214 de la batterie proche de, mais inférieure à, la température d'utilisation maximale Tlim. En outre, des paliers dégressifs de puissance de refroidissement 216 de par des paliers décroissants de vitesse de rotation du compresseur peuvent être perçus par l'utilisateur et permettent de lui indiquer que la recharge de la batterie 4 approche de son terme.

On a représenté en figure 4 un graphique représentant l'évolution de la puissance P thermique dissipée par la batterie, de la puissance P de refroidissement fournie par le dispositif de refroidissement et de la température T de la batterie en fonction du temps t selon un troisième mode d'implémentation du procédé de refroidissement. Les éléments correspondant à ceux représentés dans la figure précédente présentent des références numériques augmentées de 100 par rapport à la figure 3.

Le mode d'implémentation de la figure 4 correspond au cas où la puissance maximale de refroidissement Pcmax, symbolisée par la droite 306, est supérieure à la puissance thermique maximale dissipée Pₜₘₐₓ lors du rechargement à puissance de recharge maximale. Cela signifie qu'à tout instant, le dispositif de refroidissement 6 est capable de fournir une puissance de refroidissement 316 à la batterie 4 qui soit supérieure à la puissance thermique réelle 312 dissipée par la batterie 4 du fait de son rechargement, même sans brider le rechargement. On peut ainsi se passer de la phase B de régulation du rechargement et de la phase C de bas refroidissement.

Le procédé comprend une unique phase A de haut refroidissement, s'achevant en même temps que le rechargement de la batterie, lors de laquelle la puissance de recharge est à puissance de recharge maximale et lors de laquelle on impose une puissance de refroidissement 316 au dispositif de refroidissement 6 selon un ou plusieurs paliers P4 inférieurs à la puissance de refroidissement maximale Pcmax du dispositif de refroidissement 6, tout le long de la recharge de la batterie 4. Comme précédemment, ces paliers P4 sont obtenus par exemple par les paliers de vitesse de rotation bas du compresseur décroissants dans le temps et inférieurs au palier de vitesse de rotation intermédiaire. Ces paliers P4 de puissance de refroidissement 316 sont réalisés de sorte que la température réelle 314 de la batterie 4 reste comprise entre la température d'utilisation maximale Tlim de la batterie 4 et sa température seuil d'utilisation optimale Tmin de la batterie 4.Préférentiellement, cette phase A de haut refroidissement débute lorsque la température réelle 314 de la batterie 4 est supérieure ou égale à une température seuil d'utilisation optimale Tmin de la batterie 4. Cette température seuil d'utilisation optimale Tmin est une température en-deçà de laquelle la batterie 4 ne peut délivrer ou recevoir une puissance électrique pour son fonctionnement normal ou pour sa recharge. Cette température seuil d'utilisation optimale Tmin est une donnée connue fournie notamment par le fournisseur de la batterie 4. En d'autres termes, on commence alors le rechargement de la batterie 4 sans la refroidir. Cela permet de profiter du rechargement afin de chauffer la batterie pour que sa température initiale T0 dépasse sa température seuil d'utilisation optimale Tmin.

L'exemple de la figure 4 montre la présence d'un unique palier P4 de puissance de refroidissement 316 du dispositif de refroidissement 6, choisi de sorte que la température réelle 314 de la batterie 4 en fin de rechargement soit proche de sa température d'utilisation maximale Tlim ce qui permet d'éviter de trop refroidir la batterie 4, ce qui constituerait une dépense énergétique inutile. Il est cependant possible de prévoir un ou plusieurs paliers P4 de puissances de refroidissement 316 choisis de manière à ce que la batterie 4 présente une température réelle 314 sensiblement égale à la température d'utilisation maximale Tlim en fin de rechargement.

### Liste de références

2 : véhicule
4 : batterie
6 : dispositif de refroidissement
8 : unité de commande électronique
102, 202, 302 : courbe de puissance thermique théorique dissipée
104, 204, 304 : courbe de température théorique
106, 206, 306 : courbe de puissance de refroidissement théorique
112, 212, 312 : courbe de puissance thermique réellement dissipée
114, 214, 314 : courbe de température réelle
116, 216, 316 : courbe de puissance de refroidissement réelle

## Revendications

1. Procédé de refroidissement d'une batterie (4) de véhicule électrique ou hybride (2), **caractérisé en ce que** :
- on détermine une courbe de puissance thermique théorique (102, 202, 302) dissipée par la batterie (4) en fonction du temps lors d'un rechargement continu de la batterie à puissance de chargement maximale et de la durée du rechargement de la batterie,
- on détermine la puissance thermique maximale (Ptmax) dissipée par la batterie (4) lors du rechargement,
- on détermine une puissance maximale de refroidissement (Pcmax) d'un dispositif de refroidissement (6) de la batterie (4), le dispositif de refroidissement (6),
- on détermine une température maximale théorique (Tmax) qu'atteint la batterie (4) lors d'un rechargement à puissance de recharge maximale, en tenant compte notamment de la courbe de puissance thermique théorique (102, 202, 302) dissipée par la batterie (4), de la température extérieure et de l'état de charge initial de la batterie (4),
- on compare la puissance maximale de refroidissement (Pcmax) avec la puissance thermique maximale (Ptmax) dissipée par la batterie (4), puis
- on lance le rechargement de la batterie (4) et, en fonction de la comparaison, on impose une puissance de refroidissement au dispositif de refroidissement (6) selon plusieurs paliers successifs décroissants dans le temps.

2. Procédé selon la revendication 1, dans lequel si la puissance thermique maximale (Ptmax) dissipée par la batterie (4) est supérieure à la puissance maximale de refroidissement (Pcmax), on compare également la température maximale théorique (Tmax) de la batterie (4) avec une température d'utilisation maximale (Tlim) de la batterie (4).

3. Procédé selon la revendication 2, dans lequel si la température maximale théorique (Tmax) de la batterie (4) est supérieure à la température d'utilisation maximale (Tlim) de la batterie (4), alors le procédé comprend successivement :
- une première phase de haut refroidissement (A), lors de laquelle la puissance de recharge est à puissance de recharge maximale et lors de laquelle on impose un premier palier à la puissance de refroidissement égal à la puissance de refroidissement maximale (Pcmax) au dispositif de refroidissement (6), tout le long de la phase de haut refroidissement,
- une phase de régulation du rechargement (B), faisant suite à la phase de haut refroidissement, lors de laquelle on impose toujours un premier palier à la puissance de refroidissement égal à la puissance de refroidissement maximale (Pcmax) du dispositif de refroidissement (6) ainsi qu'une puissance de rechargement de la batterie (4) selon une consigne inférieure à la puissance de recharge maximale de sorte que la puissance thermique (112) dissipée par la batterie (4) soit égale à la puissance de refroidissement maximale (Pcmax) imposée au dispositif de refroidissement (6), et
- une phase de bas refroidissement (C), succédant la phase de régulation du rechargement (B), lors de laquelle la puissance de recharge est à puissance de recharge maximale et lors de laquelle on impose une puissance de refroidissement (116) au dispositif de refroidissement (6) au selon un ou plusieurs paliers (P1), jusqu'à la fin du rechargement de la batterie (4) de sorte que, lors de la phase de bas refroidissement (C), la puissance moyenne de refroidissement est égale à la puissance moyenne thermique dissipée par la batterie (4), la phase de bas refroidissement (C) s'achevant à la fin du rechargement de la batterie (4).

4. Procédé selon la revendication 3, dans lequel la phase de haut refroidissement (A) s'achève lorsque la température réelle (114) de la batterie (4) atteint la température d'utilisation maximale (Tlim).

5. Procédé selon l'une quelconque des revendications 3 ou 4, dans lequel la phase de régulation du rechargement (B) s'achève lorsque la puissance thermique réelle (112) dissipée par la batterie (4) rejoint la puissance thermique théorique (102) dissipée par la batterie (4).

6. Procédé selon la revendication 2, dans lequel si la température maximale théorique (Tmax) de la batterie (4) est inférieure à la température d'utilisation maximale (Tlim) de la batterie (4), alors le procédé comprend successivement :
- une phase de haut refroidissement (A), lors de laquelle la puissance de recharge est à puissance de recharge maximale et lors de laquelle on impose une puissance de refroidissement (216) au dispositif de refroidissement (6) selon un palier (P2) inférieur à la puissance de refroidissement maximale (Pcmax) du dispositif de refroidissement (6), tout le long de la phase de haut refroidissement,
- une phase de bas refroidissement (C), succédant la phase de haut refroidissement (A), lors de laquelle la puissance de recharge est à puissance de recharge maximale et lors de laquelle on impose une puissance de refroidissement (216) selon un ou plusieurs paliers (P3) décroissants dans le temps et inférieurs au palier (P2) de la phase de haut refroidissement (A), de sorte que, lors de la phase de bas refroidissement (C), la puissance moyenne de refroidissement est égale à la puissance thermique moyenne dissipée par la batterie (4), la phase de bas refroidissement (C) s'achevant à la fin du rechargement de la batterie.

7. Procédé selon la revendication 6, dans lequel la phase de haut refroidissement (A) s'achève lorsque la puissance thermique (212) dissipée par la batterie (4) atteint le palier (P2) de la puissance de refroidissement (216) du dispositif de refroidissement (6).

8. Procédé selon la revendication 1, dans lequel si la puissance maximale de refroidissement (Pcmax) est supérieure à la puissance thermique maximale (Ptmax) dissipée par la batterie (4) lors du rechargement à puissance de recharge maximale, alors le procédé comprend une unique phase de haut refroidissement (A), s'achevant en même temps que le rechargement de la batterie, lors de laquelle la puissance de recharge est à puissance de recharge maximale et lors de laquelle on impose une puissance de refroidissement (316) au dispositif de refroidissement (6) selon un ou plusieurs paliers (P4) inférieurs à la puissance de refroidissement maximale (Pcmax) du dispositif de refroidissement (6), tout le long de la recharge de la batterie (4), de sorte que la température réelle (314) de la batterie (4) reste comprise entre la température d'utilisation maximale (Tlim) de la batterie (4) et une température seuil d'utilisation optimale (T0) de la batterie (4).

9. Procédé selon l'une quelconque des revendications 3 à 8, dans lequel la phase de haut refroidissement (A) débute si la température initiale (Tinit) de la batterie (4) est supérieure ou égale à la température seuil d'utilisation optimale (T0) de la batterie (4).

10. Procédé selon l'une quelconque des revendications précédentes, dans lequel le dispositif de refroidissement (6) de la batterie (4) est compris dans un dispositif de climatisation d'un habitacle de véhicule, la détermination de la puissance maximale de refroidissement (Pcmax) du dispositif de refroidissement (6) de la batterie (4) correspondant à la puissance maximale de refroidissement du dispositif de climatisation retranché de la puissance de refroidissement utilisé pour le refroidissement de l'habitacle.

## Patentansprüche

1. Verfahren zum Kühlen einer Batterie (4) eines Elektro- oder Hybridfahrzeugs (2), **dadurch gekennzeichnet, dass**:
∘ eine theoretische Wärmeleistungskurve (102, 202, 302), die von der Batterie (4) abgeführt wird, in Abhängigkeit von der Zeit während eines kontinuierlichen Wiederaufladens der Batterie bei maximaler Ladeleistung und für die Dauer des Wiederaufladens der Batterie bestimmt wird,
∘ die maximale Wärmeleistung (Ptmax), die von der Batterie (4) während des Wiederaufladens abgeführt wird, bestimmt wird,
∘ eine maximale Kühlleistung (Pcmax) einer Kühlvorrichtung (6) der Batterie (4) bestimmt wird, die Kühlvorrichtung (6),
∘ eine maximale theoretische Temperatur (Tmax), die die Batterie (4) während eines Wiederaufladens bei maximaler Ladeleistung erreicht, bestimmt wird, wobei insbesondere die theoretische Wärmeleistungskurve (102, 202, 302), die von der Batterie (4) abgeführt wird, die Außentemperatur und der anfängliche Ladezustand der Batterie (4) berücksichtigt werden,
∘ die maximale Kühlleistung (Pcmax) mit der maximalen Wärmeleistung (Ptmax) verglichen wird, die von der Batterie (4) abgeführt wird, dann
∘ das Wiederaufladen der Batterie (4) gestartet wird und in Abhängigkeit von dem Vergleich eine Kühlleistung an die Kühlvorrichtung (6) gemäß mehreren aufeinanderfolgenden abnehmenden Stufen über die Zeit angelegt wird.

2. Verfahren nach Anspruch 1, wobei, wenn die maximale Wärmeleistung (Ptmax), die von der Batterie (4) abgeführt wird, größer ist als die maximale Kühlleistung (Pcmax), die maximale theoretische Temperatur (Tmax) der Batterie (4) auch mit einer maximalen Betriebstemperatur (Tlim) der Batterie (4) verglichen wird.

3. Verfahren nach Anspruch 2, wobei, wenn die maximale theoretische Temperatur (Tmax) der Batterie (4) größer ist als die maximale Betriebstemperatur (Tlim) der Batterie (4), das Verfahren nacheinander umfasst:
∘ eine erste Hochkühlphase (A), während der die Wiederaufladeleistung auf maximaler Wiederaufladeleistung liegt und während der eine erste Stufe der Kühlleistung gleich der maximalen Kühlleistung (Pcmax) an die Kühlvorrichtung (6) während der gesamten Hochkühlphase angelegt wird,
∘ eine Wiederaufladeregelungsphase (B) im Anschluss an die Hochkühlphase, während der immer eine erste Stufe der Kühlleistung gleich der maximalen Kühlleistung (Pcmax) der Kühlvorrichtung (6) sowie eine Wiederaufladeleistung der Batterie (4) gemäß einem Sollwert angelegt wird, der niedriger ist als die maximale Wiederaufladeleistung, so dass die von der Batterie (4) abgeführte Wärmeleistung (112) gleich der an die Kühlvorrichtung (6) angelegten maximalen Kühlleistung (Pcmax) ist, und
∘ eine Niedrigkühlphase (C) im Anschluss an die Wiederaufladeregelungsphase (B), während der die Wiederaufladeleistung auf maximaler Wiederaufladeleistung liegt und während der eine Kühlleistung (116) an die Kühlvorrichtung (6) gemäß einer oder mehreren Stufen (P1) bis zum Ende des Wiederaufladens der Batterie (4) angelegt wird, so dass während der Niedrigkühlphase (C) die durchschnittliche Kühlleistung gleich der durchschnittlichen von der Batterie (4) abgeführten Wärmeleistung ist, wobei die Niedrigkühlphase (C) am Ende des Wiederaufladens der Batterie (4) endet.

4. Verfahren nach Anspruch 3, wobei die Hochkühlphase (A) endet, wenn die tatsächliche Temperatur (114) der Batterie (4) die maximale Betriebstemperatur (Tlim) erreicht.

5. Verfahren nach einem der Ansprüche 3 oder 4, wobei die Wiederaufladeregelungsphase (B) endet, wenn die tatsächliche Wärmeleistung (112), die von der Batterie (4) abgeführt wird, wieder die theoretische Wärmeleistung (102) erreicht, die von der Batterie (4) abgeführt wird.

6. Verfahren nach Anspruch 2, wobei, wenn die maximale theoretische Temperatur (Tmax) der Batterie (4) niedriger ist als die maximale Betriebstemperatur (Tlim) der Batterie (4), das Verfahren nacheinander umfasst:
∘ eine Hochkühlphase (A), während der die Wiederaufladeleistung auf maximaler Wiederaufladeleistung liegt und während der eine Kühlleistung (216) an die Kühlvorrichtung (6) gemäß einer Stufe (P2) angelegt wird, die niedriger ist als die maximale Kühlleistung (Pcmax) der Kühlvorrichtung (6), während der gesamten Hochkühlphase,
∘ eine Niedrigkühlphase (C) im Anschluss an die Hochkühlphase (A), während der die Wiederaufladeleistung auf maximaler Wiederaufladeleistung liegt und während der eine Kühlleistung (216) gemäß einer oder mehreren abnehmenden Stufen (P3) über die Zeit und niedriger als die Stufe (P2) der Hochkühlphase (A) angelegt wird, so dass während der Niedrigkühlphase (C) die durchschnittliche Kühlleistung gleich der durchschnittlichen von der Batterie (4) abgeführten Wärmeleistung ist, wobei die Niedrigkühlphase (C) am Ende des Wiederaufladens der Batterie endet.

7. Verfahren nach Anspruch 6, wobei die Hochkühlphase (A) endet, wenn die von der Batterie (4) abgeführte Wärmeleistung (212) die Stufe (P2) der Kühlleistung (216) der Kühlvorrichtung (6) erreicht.

8. Verfahren nach Anspruch 1, wobei, wenn die maximale Kühlleistung (Pcmax) größer ist als die maximale Wärmeleistung (Ptmax), die von der Batterie (4) während des Wiederaufladens bei maximaler Wiederaufladeleistung abgeführt wird, das Verfahren eine einzige Hochkühlphase (A) umfasst, die gleichzeitig mit dem Wiederaufladen der Batterie endet, während der die Wiederaufladeleistung auf maximaler Wiederaufladeleistung liegt und während der eine Kühlleistung (316) an die Kühlvorrichtung (6) gemäß einer oder mehreren Stufen (P4) angelegt wird, die niedriger sind als die maximale Kühlleistung (Pcmax) der Kühlvorrichtung (6), während des gesamten Wiederaufladens der Batterie (4), so dass die tatsächliche Temperatur (314) der Batterie (4) zwischen der maximalen Betriebstemperatur (Tlim) der Batterie (4) und einer optimalen Betriebsschwellentemperatur (TO) der Batterie (4) bleibt.

9. Verfahren nach einem der Ansprüche 3 bis 8, wobei die Hochkühlphase (A) beginnt, wenn die Anfangstemperatur (Tinit) der Batterie (4) größer oder gleich der optimalen Betriebsschwellentemperatur (TO) der Batterie (4) ist.

10. Verfahren nach einem der vorhergehenden Ansprüche, wobei die Kühlvorrichtung (6) der Batterie (4) in einer Klimaanlage für einen Fahrzeuginnenraum enthalten ist, wobei die Bestimmung der maximalen Kühlleistung (Pcmax) der Kühlvorrichtung (6) der Batterie (4) der maximalen Kühlleistung der Klimaanlage entspricht, von der die zum Kühlen des Fahrgastraums verwendete Kühlleistung abgezogen wird.

## Claims

1. A method for cooling a battery (4) of an electric or hybrid vehicle (2), **characterized in that**:
∘ a theoretical thermal power curve (102, 202, 302) dissipated by the battery (4) is determined as a function of time during a continuous recharging of the battery at maximum charging power and for the duration of the recharging of the battery,
∘ the maximum thermal power (Ptmax) dissipated by the battery (4) during recharging is determined,
∘ a maximum cooling power (Pcmax) of a cooling device (6) of the battery (4) is determined, the cooling device (6),
∘ a maximum theoretical temperature (Tmax) that the battery (4) reaches during a recharge at maximum charging power is determined, taking into account in particular the theoretical thermal power curve (102, 202, 302) dissipated by the battery (4), the external temperature and the initial state of charge of the battery (4),
∘ the maximum cooling power (Pcmax) is compared with the maximum thermal power (Ptmax) dissipated by the battery (4), then
∘ recharging of the battery (4) is started and, depending on the comparison, a cooling power is imposed on the cooling device (6) according to several successive decreasing steps over time.

2. The method according to claim 1, wherein if the maximum thermal power (Ptmax) dissipated by the battery (4) is greater than the maximum cooling power (Pcmax), the maximum theoretical temperature (Tmax) of the battery (4) is also compared with a maximum operating temperature (Tlim) of the battery (4).

3. The method according to claim 2, wherein if the maximum theoretical temperature (Tmax) of the battery (4) is greater than the maximum operating temperature (Tlim) of the battery (4), then the method successively comprises:
∘ a first high cooling phase (A), during which the recharging power is at maximum recharging power and during which a first level of cooling power equal to the maximum cooling power (Pcmax) is imposed on the cooling device (6), throughout the high cooling phase,
∘ a recharging regulation phase (B), following the high cooling phase, during which a first level of cooling power equal to the maximum cooling power (Pcmax) of the cooling device (6) is always imposed, as well as a recharging power of the battery (4) according to a setpoint lower than the maximum recharging power so that the thermal power (112) dissipated by the battery (4) is equal to the maximum cooling power (Pcmax) imposed on the cooling device (6), and
∘ a low cooling phase (C), succeeding the recharging regulation phase (B), during which the recharging power is at maximum recharging power and during which a cooling power (116) is imposed on the cooling device (6) according to one or more levels (P1), until the end of the recharging of the battery (4) so that, during the low cooling phase (C), the average cooling power is equal to the average thermal power dissipated by the battery (4), the low cooling phase (C) ending at the end of the recharging of the battery (4).

4. The method according to claim 3, wherein the high cooling phase (A) ends when the actual temperature (114) of the battery (4) reaches the maximum operating temperature (Tlim).

5. The method according to any one of claims 3 or 4, wherein the recharging regulation phase (B) ends when the actual thermal power (112) dissipated by the battery (4) rejoins the theoretical thermal power (102) dissipated by the battery (4).

6. The method according to claim 2, wherein if the maximum theoretical temperature (Tmax) of the battery (4) is lower than the maximum operating temperature (Tlim) of the battery (4), then the method successively comprises:
∘ a high cooling phase (A), during which the recharging power is at maximum recharging power and during which a cooling power (216) is imposed on the cooling device (6) according to a level (P2) lower than the maximum cooling power (Pcmax) of the cooling device (6), throughout the high cooling phase,
∘ a low cooling phase (C), succeeding the high cooling phase (A), during which the recharging power is at maximum recharging power and during which a cooling power (216) is imposed according to one or more decreasing levels (P3) over time and lower than the level (P2) of the high cooling phase (A), so that, during the low cooling phase (C), the average cooling power is equal to the average thermal power dissipated by the battery (4), the low cooling phase (C) ending at the end of the recharging of the battery.

7. The method according to claim 6, wherein the high cooling phase (A) ends when the thermal power (212) dissipated by the battery (4) reaches the level (P2) of the cooling power (216) of the cooling device (6).

8. The method according to claim 1, wherein if the maximum cooling power (Pcmax) is greater than the maximum thermal power (Ptmax) dissipated by the battery (4) during recharging at maximum recharging power, then the method comprises a single high cooling phase (A), ending at the same time as the recharging of the battery, during which the recharging power is at maximum recharging power and during which a cooling power (316) is imposed on the cooling device (6) according to one or more levels (P4) lower than the maximum cooling power (Pcmax) of the cooling device (6), throughout the recharging of the battery (4), so that the actual temperature (314) of the battery (4) remains between the maximum operating temperature (Tlim) of the battery (4) and an optimal operating threshold temperature (TO) of the battery (4).

9. The method according to any one of claims 3 to 8, wherein the high cooling phase (A) begins if the initial temperature (Tinit) of the battery (4) is greater than or equal to the optimal operating threshold temperature (TO) of the battery (4).

10. The method according to any one of the preceding claims, wherein the cooling device (6) of the battery (4) is comprised in an air conditioning device for a vehicle passenger compartment, the determination of the maximum cooling power (Pcmax) of the cooling device (6) of the battery (4) corresponding to the maximum cooling power of the air conditioning device from which the cooling power used for cooling the passenger compartment is subtracted.
